# EUROPÄISCHE PATENTSCHRIFT

(11) **EP 3 026 846 B1**
(45) Veröffentlichungstag und Bekanntmachung des Hinweises auf die Patenterteilung: **21.08.2019**
(21) Anmeldenummer: 15195753.7
(22) Anmeldetag: 23.11.2015
(51) Int. Cl.: H04L 12/24, H04L 12/771, H04L 12/26

(54) **VORRICHTUNG UND VERFAHREN ZUM TRIGGERGESTEUERTEN KONFIGURATIONSWECHSEL IN EINEM ROUTERSYSTEM**
DEVICE AND METHOD FOR TRIGGER-CONTROLLED SWITCHING OF CONFIGURATION IN A ROUTER SYSTEM
DISPOSITIF ET PROCEDE DE CHANGEMENT DE CONFIGURATION COMMANDE PAR DECLENCHEMENT DANS UN SYSTEME DE ROUTEUR

(30) Priorität: 25.11.2014 DE 102014117266
(43) Veröffentlichungstag der Anmeldung: 01.06.2016
(73) Patentinhaber: Insys Microelectronics GmbH, 93049 Regensburg (DE)
(72) Erfinder: Kress, Michael, 93047 Regensburg (DE); Brunner, Markus, 93080 Pentling-Matting (DE); Tomahogh, Christian, 93057 Regensburg (DE); Gallenberger, Stefan, 93049 Regensburg (DE); Noll, Heiko, 93049 Regensburg (DE); Heider, Markus, 93133 Burglengenfeld (DE)
(74) Vertreter: Hannke, Christian

(56) Entgegenhaltungen:
- EP-A1- 1 237 078
- WO-A1-2012/136261
- US-A1- 2007 274 230
- US-A1- 2014 317 248
- Anonymous: "Router Error Codes - DocWiki", , 17. Juni 2014 (2014-06-17), Seiten 1-12, XP055258707, Gefunden im Internet: URL:https://web.archive.org/web/2014061715 5456/http://docwiki.cisco.com/wiki/Router_ Error_Codes [gefunden am 2016-03-16]
- Anonymous: "Using the Reset Config Button on the SRX210 Services Gateway - Technical Documentation - Support - Juniper Networks", , 23. Juni 2013 (2013-06-23), XP055258260, Gefunden im Internet: URL:http://www.juniper.net/techpubs/en_US/ release-independent/junos/topics/task/oper ational/reset-config-button-srx210-using.h tml [gefunden am 2016-03-15]
- Anonymous: "Cisco 3800 Series Hardware Installation - Troubleshooting Cisco 3800 Series Routers [Cisco 3800 Series Integrated Services Routers] - Cisco", , 3 October 2014 (2014-10-03), XP055434970, Retrieved from the Internet: URL:https://web.archive.org/web/2014100314 5343/http://www.cisco.com:80/c/en/us/td/do cs/routers/access/3800/hardware/installati on/guide/hw/38troub.html [retrieved on 2017-12-13]

## Beschreibung

Die Erfindung betrifft ein Routersystem zur Übertragung von Daten zwischen mindestens zwei verschiedenen Datennetzen mit einer im Gehäuse des Routersystems angeordneten Konfigurationseinrichtung zum Erstellen, Speichern und Verwalten von mindestens zwei Routerkonfigurationen. Weiterhin betrifft die Erfindung ein Verfahren zur Änderung von einer aktiven Routerkonfigurationen zu einer anderen Routerkonfiguration in einem Routersystem.

Als Router werden Geräte verstanden, die Datenpakete von einem in ein anderes oder in mehrere andere Netzwerke übertragen können. Router zur Verbindung mindestens zweier Datennetzwerke miteinander sind aus dem Stand der Technik bekannt. Dabei unterscheiden sich Router je nach Anwendung teilweise sehr stark voneinander. Internetanbieter oder auch andere Unternehmen mit sehr großen internen Netzwerken und/oder sehr großem Datendurchsatz verwenden üblicherweise Hochleistungsrouter im 19-Zoll Format. Diese Router sind modular aufgebaut und benötigen aufgrund ihrer Leistungsfähigkeit üblicherweise eine aktive Kühlung und entsprechend leistungsfähige Netzteile. Diese Hochleistungsrouter werden üblicherweise in Ihrer Konfiguration selten verändert. Nach Stand der Technik wird die Konfiguration der Router bei Ausfall bestimmter IP-Strecken flexibel verändert, sobald Ausfälle bekannt gemacht werden. Hierfür gibt es eigens entwickelte Protokolle, die eine schnelle Umschaltung der Konfiguration der Paketweiterleitung (Routingtabellen) ermöglichen. Die Auslöser für diese Umschaltung sind stets IP-basierte Ereignisse.

Für den privaten Bereich, wo die Anbindung eines einzigen oder weniger Netzwerkteilnehmer mit einem externen Netzwerk (Internet) gewünscht wird, sind Router oft kompakte Geräte mit entsprechend geringer Leistungsfähigkeit. Sie umfassen oft eine Modemfunktionalität, die die Verbindung über DSL oder Kabel mit dem Internet ermöglicht. Die Konfiguration dieser Geräte wird in der Regel einmalig erstellt, und während der meist mehrjährigen Einsatzdauer nicht geändert. Unterschiedliche Betriebsmodi sind nicht gebräuchlich. Im privaten Bereich sind außerdem im Bereich der Telefonie Geräte bekannt, die zeitbasiert Telefonanrufe mit Vorwahlnummern versehen. Ziel dieser sogenannten Least Cost Router ist es, die günstigsten Telefonanbieter zu bestimmten Uhrzeiten in Abhängigkeit der Zielrufnummer zu ermitteln und automatisch in den Rufaufbau zu integrieren.

Insbesondere bei professionellen Anwendungen verbreitet sich der Einsatz von Kommunikationsgeräten zur Datenübertragung sehr. Auch hier hat sich als Kommunikationsprotokoll weitgehend das Internet Protokoll (IP) durchgesetzt. Bei Verwendung des IP-Protokolls ist an jedem Übergangspunkt eines IP-Netzes in ein anders Netz ein Router erforderlich. Bei professionellen Routern ist es außerdem üblich, dass weitere Schnittstellen vorhanden sind, die andere Protokolle als IP beherrschen.

Die professionelle Datenübertragungstechnik per IP-Protokoll findet zunehmend Anwendung in der Industrie, im Anlagenbau, in der Automatisierungstechnik, in der Gebäudeautomatisation, in der Energiewirtschaft (z.B. Smart Grid, Smart Metering, Elektromobilität und andere), in der Infrastruktur (z.B. Wasserver- oder entsorgung), bei Bezahlsystemen, in medizintechnischen Geräten und vielen Bereichen mehr. Insbesondere auch in Bereichen der sogenannten kritischen Infrastrukturen nimmt die Verbreitung der IP-Kommunikation stark zu, wodurch auch die Anforderungen an die verwendeten Router kontinuierlich wachsen.

In professionellen Anwendungen, insbesondere im Bereich des temporären Fernzugriffs auf Maschinen und Anlagen sind Router häufig in unterschiedlichen Betriebszuständen eingesetzt, die durch unterschiedliche Konfigurationen ermöglicht werden können. Dies unterscheidet sie von Hochleistungsroutern in Übertragungsnetzen der Telekommunikationsprovider, und auch von Routern im Privatbereich. In manchen Anwendungsfällen ist es aus Gründen der Betriebssicherheit oder zur Vermeidung von Unfällen vorgeschrieben (z.B. sog. Maschinenrichtlinie), dass ein Fernzugriff nur möglich sein darf, wenn vor Ort eine Person die Freigabe für den Fernzugriff erteilt, z.B. über einen Schalter an einer Maschine. Dies ermöglicht es, dass Fachkräfte aus großer Distanz Änderungen und Fehlerbehebungen an Anlagen vornehmen können, die ein Bediener vor Ort aufgrund mangelnder Fachkenntnis nicht vornehmen könnte.

In anderen Anwendungen kann es erforderlich sein, Konfigurationen zu ändern anhand
- externer Signale (z.B. Temperaturen, Spannungsänderungen, Schaltsignale),
- aufgrund zeitlich basierter Ereignisse oder auch
- aufgrund externer Nachrichten, die nicht IP-basiert sind (Mobilfunk-Kurznachrichten)
- aufgrund des Inhalts (Payload) der zu übertragenen Daten, oder aufgrund der Metadaten eines Telegramms (Absenderadresse, Zieladresse,...), oder aufgrund
- sicherheitsrelevanter Ereignisse (Firewallverletzung, Manipulationsversuche, unerwünschter Zugriff,..), insbesondere im Bereich sicherheitskritischer Anwendungen und kritischer Infrastrukturen.

Zu diesem Zweck ist es eine sinnvolle Lösung, für unterschiedliche Betriebszustände unterschiedliche Konfigurationen auf dem Gerät zu speichern. Diese Konfigurationen können dann durch externe oder interne Anforderungen nach Bedarf aktiviert werden. Für die Umschaltung von Konfigurationen kann es unterschiedlichste Gründe geben. Nach Stand der Technik werden die Konfigurationen von Routern (insbesondere von Hochleistungsroutern im 19-Zoll zur Verbindung von WANs) während der Laufzeit durch IP-basierte Ereignisse umgestellt. Insbesondere wenn festgestellt wird, dass ein Paket auf einem vorgesehenen Weg sein Ziel nicht erreichen kann, wird die Konfiguration verändert, so dass das Paket auf einem Ersatzweg zugestellt werden kann.

Die Druckschrift "Anonymous: "Router Error Codes - Doc Wiki" 17. Juni 2014 (2014-06-17), Seiten 1 bis 12, XP055258709, Gefunden im Internet: URL:https://web. archive.org/web/20140617155456/http://docwiki.cisco.com/wiki/Router Error Codes [gefunden am 16-03-16] zeigt ein Routersystem zur Übertragung von Daten zwischen mindestens zwei verschiedenen Datennetzen, wobei das Routersystem eine im Gehäuse des Routersystems angeordnete Konfigurationseinrichtung zum Erstellen, Speichern und Verwalten von mindestens zwei Routerkonfigurationen umfasst.

Die WO 2012/136261 A zeigt ein Verfahren, beim dem ein Netzwerkknoten mindestens zwei verschiedene Konfigurationen aufweist, von denen eine jeweils verwendet wird, und das Auftreten eines Triggerereignisses bewirkt, sodass eine aktuell verwendete Konfiguration in eine Konfiguration geändert wird, die dem Triggerereignis zugeordnet ist.

Die "Anonymous: "Cisco 3800 Series Hardware Installation - Troubleshooting Cisco 3800 Series Routers [Cisco 3800 Series Integrated Services Routers] - Cisco", 3. Oktober 2014 (2014-10-03), XP055434970, Gefunden im Internet: URL:https://web.archive.org/web/20141003145343/http://www.cisco.com:80/c/en/us/td/docs/routers/acess/3800/hardware/installation/guide/hw/38troub.html" zeigt ebenso ein Routersystem zur Übertragung von Daten zwischen mindestens zwei verschiedenen Datennetzen.

Aufgabe der Erfindung ist es, ein Routersystem bereitzustellen, dass flexibel auf eine große Anzahl von externen oder geräteinternen Auslösern reagieren kann und in Abhängigkeit des Auslösesignals das Routersystem von einer aktiven Routerkonfiguration zu einer anderen Routerkonfiguration umschalten kann.

Weiterhin ist es Aufgabe der Erfindung ein Verfahren zur Umschaltung von einer aktiven Routerkonfiguration zu einer anderen Routerkonfiguration in einem Routersystem in Abhängigkeit des Eingangs eines externen oder geräteinternen Auslösers bereitzustellen.

Gelöst werden diese Aufgaben durch die Gegenstände der unabhängigen Ansprüche 1 und 6.
Als externer oder geräteinterner Auslöser soll jegliches Signal verstanden werden, aufgrund dessen eine Änderung der Routerkonfiguration ausgelöst werden kann. Im Folgenden werden derartige Signale auch als Trigger oder Triggersignale bezeichnet.

Als Änderung der Routerkonfiguration wird im Folgenden erfindungsgemäß jegliche Änderung in der Konfiguration eines Routersystems bezeichnet, wobei es sich dabei um die zumindest teilweise Änderung von Konfigurationsprofilen handelt, wie zum Beispiel ein Tag- oder ein Nacht-Konfigurationsprofil oder ein Mobilfunknetz- oder Kabelnetz-Konfigurationsprofil. Werden nur Teile des Konfigurationsprofils verändert, beispielsweise eine bestehende Verbindung durch eine VPN-Verschlüsselung ergänzt, muss üblicherweise nicht das gesamte Konfigurationsprofil geändert werden. In einem solchen Fall wäre eine Änderung des aktiven Profils ausreichend. Da die Grenze zwischen Profilwechsel und (Ab-) Änderung eines Profils jedoch fließend ist, werden diese Änderungen im Folgenden allgemein als Änderung in der Konfiguration eines Routersystems bzw. Änderung der Routerkonfiguration bezeichnet.

Ein wesentlicher Aspekt der Erfindung ist ein Routersystem zur Übertragung von Daten zwischen mindestens zwei verschiedenen Datennetzen, wobei das Routersystem eine im Gehäuse des Routersystems angeordnete Konfigurationseinrichtung zum Erstellen, Speichern und Verwalten von mindestens zwei Routerkonfigurationen umfasst. Weiterhin weist das Routersystem mindestens eine Empfangseinrichtung auf, über welche mindestens drei verschiedene Triggersignale empfangbar sind, und wobei die Empfangseinrichtung über eine Datenverbindung mit der Konfigurationseinrichtung verbunden ist und die Konfigurationseinrichtung dazu geeignet ist, in Abhängigkeit von den mindestens drei verschiedenen Triggersignalen in dem Routersystem eine andere Routerkonfiguration als die zum Zeitpunkt des Empfangs des Triggersignals aktive Routerkonfiguration aktiv zu schalten.

Da in einem solchen Routersystem die Empfangseinrichtung so ausgelegt ist, dass sie mindestens drei verschiedene Triggersignale empfangen und verarbeiten kann, bietet ein solches Routersystem eine große Variabilität. Es können - bevorzugt über diverse verschiedene Kanäle - Triggersignale an das Routersystem gesendet und von diesem verarbeitet werden. Bevorzugt gehören dabei die Kanäle, auf denen die mindestens drei verschiedenen Triggersignale empfangbar sind, zu unterschiedlichen Netzwerken oder Anschlüssen des Routers. Beispielsweise könnte einer der Kanäle für ein Triggersignal ein WAN sein, ein anderer Kanal ein LAN und ein weiterer ein (z.B. serieller) Anschluss. Als einfachster serieller Anschluss könnte beispielsweise ein Schalter zum Umschalten zwischen zwei Routerkonfigurationen direkt auf dem Routergehäuse (oder an einer sonstigen geeigneten Stelle in unmittelbarer Nähe des Routergehäuses) angeordnet sein. Dadurch könnte beispielsweise bei Wartungsarbeiten der Router in einen dafür geeigneten Zustand versetzt werden. In diesem Zusammenhang sei angemerkt, dass das Ein- bzw. Ausschalten des Routers kein Triggersignal im Sinn dieser Erfindung darstellt, da weder beim Einschalten noch beim Ausschalten ein Wechsel von einer aktiven Routerkonfiguration zu einer anderer aktiven Routerkonfiguration stattfindet. Vielmehr erfolgt dabei ein Wechsel von einem Zustand, in dem eine Routerkonfiguration aktiv ist in einen Zustand, in dem keine Routerkonfiguration aktiv ist oder umgekehrt.

Bevorzugt ist eine Ausführungsform des Routersystems bei dem durch die Empfangseinrichtung mindestens vier, bevorzugt mindestens fünf, besonders bevorzugt mindestens sechs verschiedene Triggersignale empfangbar sind und die Konfigurationseinrichtung dazu geeignet ist, in Abhängigkeit von den verschiedenen Triggersignalen in dem Routersystem eine andere Routerkonfiguration als die zum Zeitpunkt des Empfangs des Triggersignals aktive Routerkonfiguration aktiv zu schalten. Dadurch wird es Nutzern ermöglicht, sehr viele Kanäle nutzen zu können, um das Routersystem ihren aktuellen Anforderungen entsprechend in der Konfiguration verändern zu können. Insbesondere eine Vielzahl von verschiedenen Triggersignalen, die über WAN oder LAN zum Routersystem gesendet werden können, ist von großem Interesse. Dabei können diese Triggersignale sowohl netzwerkbasierte als auch zeit- oder benutzerinitiierte Signale sein.

Als netzwerkbasierte Triggersignale werden beispielsweise Signale verstanden, die einen Abbruch einer bestimmten Datenverbindung, einen Leistungsabfall einer bestimmten Datenverbindung (Verlangsamung, schwache Signalstärke o.Ä.), oder das Erreichen (oder annähern an) eine Kapazitätsgrenze einer bestimmten Datenverbindung anzeigen.

Zeitinitiierte Signale sind beispielsweise Triggersignale, die nach einer bestimmten Zeit oder zu einer bestimmten Uhrzeit/einem bestimmten Tag gesendet werden. Beispielsweise könnte so das Routersystem zwischen einem Tag- und einem Nachtmodus umgeschaltet werden um beispielsweise Energiekosten zu sparen oder bestimmte Netzwerkressourcen zu schonen oder für andere Verbindungen zur Verfügung zu stehen. Außerdem wäre es denkbar, dass das Routersystem sich zeitabhängig einem Selbsttest unterzieht und dazu in eine andere Konfiguration wechselt. In dieser Konfiguration könnte beispielsweise eine Verbindung zu einem Update-Server aufgebaut werden. Auch der Wechsel in Abhängigkeit von einem Zeitintervall ist in vielen Fällen sinnvoll. So könnte beispielsweise im o.g. Beispiel nachdem das Routersystem in der "Selbsttest-Konfiguration" war, nach einer gewissen Zeit ein erneuter Konfigurationswechsel vorgesehen sein, mit dem das Routersystem in die Ausgangskonfiguration zurück wechselt. Wichtig sind Zeitintervall-abhängige Konfigurationswechsel auch dann, wenn durch einen Konfigurationswechsel das Routersystem in einen (fehlerhaften) Zustand geschaltet wurde, der den Zugang zu dem Router - z.B. über das Datennetz, aus dem das Triggersignal zum Umschalten in diesen Zustand kam - nicht mehr möglich ist. In diesem Fall könnte das Routersystem nach einem vorgegebenen Zeitintervall wieder in die vorherige Konfiguration zurückschalten.

So könnte beispielsweise mittels einer Zeiterfassungseinrichtung ein Zeitintervall zwischen einem Wechsel von einer ersten aktivierten Konfiguration zu einer zweiten Konfiguration und einer Bestätigung dieses Wechsels der Konfiguration durch einen Benutzer gemessen werden. Sollte innerhalb eines vorbestimmbaren Zeitintervalls die zweite Konfiguration nicht durch den Benutzer bestätigt worden sein, könnte dies darauf zurück zu führen sein, dass die Verbindung zwischen dem Benutzer und dem Routersystem nicht mehr möglich ist. Um dennoch einen Betrieb des Routersystems gewährleisten zu können, könnte die zweite Konfiguration lediglich temporär aktiviert werden und nach Ablauf des Zeitintervalls auf die erste, zuvor aktive Konfiguration zurück geschaltet werden.

Benutzerinitiierte Signale könnten beispielsweise Signale sein, die durch einen Benutzer direkt am Router vorgenommen werden. Beispielsweise könnte dies wie oben erwähnt das umlegen eines Schalters sein oder auch das Einstecken eines (Authentifizierung-) Schlüssels wie beispielsweise eines USB-Sticks oder einer Chip-Karte.

Wie oben erwähnt, ist es bevorzugt, wenn einige Profile nur temporär aktiviert sind. In einer bevorzugten Ausführungsform des Routersystems verfügt dieses daher über eine Bewertungseinrichtung, mittels der eine Klassifizierung der Routerkonfigurationen möglich ist. Hierzu wird zwischen zwei verschiedenen Arten von Routerkonfigurationen und somit auch von Konfigurationsänderungen unterschieden: der "dynamischen Konfigurationsänderung" und der "statischen Konfigurationsänderung".

Die dynamische (oder auch "volatile") Konfigurationsänderung eines Routers bezeichnet die Änderung und anschließende Anwendung eines oder mehrerer Betriebsparameter, und kann auf zwei Ebenen stattfinden. Für viele Situationen ist es beispielsweise sinnvoll, das Routersystem nach einem Systemstart immer mit einer bestimmten (Standard-) Konfiguration zu betreiben. Die Prüfung der als Auslöser/Trigger definierten Ereignisse liefert dann möglicherweise ein Ereignis, das eine dynamische Umschaltung der Konfiguration auslöst. Im Gegensatz zur statischen Konfigurationsänderung wird aber diese Änderung nicht dauerhaft gespeichert, und beim nächsten Neustart des Routers wird wieder mit der dauerhaft gespeicherten Konfiguration gestartet. Diese Vorgehensweise ist besonders sinnvoll bei schnell oder häufig wechselnden Konfigurationen. Diese häufig wechselnden Konfigurationen kommen häufig beim Aufbau von Kommunikationsverbindungen zum Einsatz. Besonders bei Verwendung von IP-Protokollen wird meist eine Verbindung in Weitverkehrsnetze (Internet) aufgebaut. Über diese Verbindung können dann viele weitere logische Verbindungen zu unterschiedlichen Zielen aufgebaut werden. Insbesondere verschlüsselte Verbindungen sind häufig nur temporär aufgebaut. Abhängig von der Art der Verbindung in das weitverkehrsnetz kann es sinnvoll sein, z.B. je nach Qualität der Weitverkehrsverbindung unterschiedliche Verschlüsselungsparameter oder unterschiedliche Verschlüsselungsprotokolle zu verwenden.

Als eine statische (oder "nicht volatile Konfigurationsänderung wird nicht nur eine Änderung und Anwendung eines oder mehrerer Betriebsparameter bezeichnet, sondern auch die dauerhafte Speicherung dieser Änderung in einem nicht flüchtigen Speicher des Routers. Nach einem Neustart des Geräts wird dann diese geänderte Konfiguration auch ohne Vorliegen eines auslösenden Ereignisses verwendet.

Bevorzugt ist daher eine Ausführungsform des Routersystems, bei dem die Konfigurationseinrichtung verschiedene Speicher oder Speicherbereiche für Routerkonfigurationsdaten aufweist, wobei ein Speicher oder Speicherbereich ein flüchtiger Speicher oder Speicherbereich für temporär aktive Routerkonfigurationen ist und ein anderer Speicher oder Speicherbereich ein nicht flüchtiger Speicher oder Speicherbereich für eine Routerkonfiguration ist, die bei einem Neustart des Routersystems aktiv ist.

Wie oben bereits erwähnt, ist es vorteilhaft, wenn ein Routersystem eine Vielzahl von Triggersignalen erkennen und entsprechend auf sie reagieren kann. Jedes dieser Triggersignale (auch Auslöser oder Ereignisse) ist ein möglicher Auslöser für eine statische oder dynamische Konfigurationsänderung. Trigger können wie oben bereits angedeutet durch Ursachen ausgelöst werden, die Ihren Ursprung in der Kommunikation haben, beispielsweise IP-Pakete oder auch das Fehlen von Antworten auf versendete IP-Pakete. Trigger können aber auch durch andere Kommunikationskanäle (SMS, Email) oder auch durch kommunikationsfremde Zustände ausgelöst werden (Sensoren, digitale Eingänge).

Erfindungsgemäß ist daher die Empfangseinrichtung des Routersystems zum Empfang von Triggersignalen geeignet, welche ausgewählt sind aus einer Gruppe, die
i) ein Ereignis aufgrund einer fehlerhaften Authentifizierung zur Konfiguration des Geräts,
t) ein Ereignis bei Unterschreitung des freien (flüchtigen oder nicht flüchtigen) Speichers (z.B. RAM) des Routers,
umfasst.

Insbesondere ist es sinnvoll, dass mindestens eines der detektierbaren Triggersignale ein Triggersignal ist, das nicht auf einem Ereignis basiert, das durch die Netzwerke oder die Netzwerkstruktur selbst ausgelöst wird. Erfindungsgemäß ist mindestens eines der von der Empfangseinrichtung empfangbaren Triggersignale ein Triggersignal, das ausgewählt ist aus einer Gruppe, die
a) Eingang einer E-Mail Nachricht, bevorzugt auf einem Email-Server, der vom Router regelmäßig auf neue Nachrichten überprüft wird,
b) Überschreiten oder Unterschreiten einer festgelegten Temperatur, gemessen durch Sensoren im Gehäuse des Routers oder durch einen extern angeschlossene Temperatursensor,
c) Überschreiten oder Unterschreiten eines festgelegten Werts der externen Versorgungsspannung,
d) Ausfall einer von zwei oder mehreren Anliegenden externen Versorgungs-spannungen,
e) Detektion eines Schaltvorgangs an einem digitalen Eingang des Routers,
f) Überschreiten oder Unterschreiten eines konfigurierten Spannungswertes oder eines Stromwerts an einem analogen Eingang des Routers,
g) Empfang einer Kurzmitteilung bei einem mobilfunkfähigen Router,
h) Erreichen einer bestimmten Uhrzeit,
i) Ablauf einer definierten Zeitdauer (Stoppuhr),
j) Ereignis aufgrund der Erkennung eines neu angesteckten USB Geräts an einem USB-Anschluss des Routers und
k) Ereignis aufgrund empfangener Daten über eine serielle Schnittstelle umfasst.

In einigen Fällen kann es sinnvoll sein, Ereignisse miteinander zu kombinieren, um erst bei einer Kombination von Ereignissen Konfigurationsänderungen auszulösen. In einer bevorzugten Ausführungsvariante des Verfahrens erfolgt die Änderung von einer aktiven Routerkonfigurationen zu einer anderen Routerkonfiguration in dem Routersystem erst nach Empfang von mehreren, jeweils für diese Änderung notwendiger Triggersignalen. So kann es beispielsweise sinnvoll sein, die Konfiguration anhand eines externen Schaltsignals zu ändern, aber in Abhängigkeit der Uhrzeit unterschiedliche Konfigurationen zu verwenden, beispielsweise aufgrund unterschiedlicher Schichtpläne von zuständigem Personal, oder aufgrund der Auslastung bestimmter Kommunikationskanäle zu bestimmten Zeiten.

Viele sinnvolle Kombinationen von Ereignissen ergeben sich bei Verwendung einer Zeitkomponente. So kann man in der Kombination eine Mindestdauer eines bestimmten Zustandes definieren, oder nach Ablauf einer bestimmten Zeit nach einem Ereignis A eine weitere Konfigurationsänderung vornehmen. Damit können auch Konfigurationsänderungen definiert werden, die automatisch nach Ablauf einer Zeitdauer wieder zurück in den ursprünglichen Zustand gesetzt werden.

Des Weiteren kann die Kombination der Ereignisse auch mit anderen logischen Verknüpfungen versehen werden, so dass ein bestimmtes Ereignis nur dann eine Änderung der Konfiguration auslöst, wenn ein anderes Ereignis nicht aufgetreten ist (NAND), oder wenn zwei Ereignisse wahlweise auftreten (OR), und dieselbe Änderung auslösen sollen.

Weitere Vorteile, Ziele und Eigenschaften vorliegender Erfindung werden anhand anliegender Zeichnung und nachfolgender Beschreibung erläutert, in welchen beispielhaft ein Verfahren zum triggergesteuerten Konfigurationswechsel in einem Routersystem dargestellt und beschrieben ist.

Verfahrensschritte, welche in den nachfolgenden Ausführungsbeispielen der einzelnen Figuren wenigstens im Wesentlichen hinsichtlich ihrer Funktion übereinstimmen, können hierbei mit identischen Bezugszeichen gekennzeichnet sein, wobei diese Verfahrensschritte der Übersichtlichkeit halber nicht in allen Figuren beziffert und erläutert sein müssen.

In den Figuren zeigen:
- Figur 1: ein Verlaufsdiagramm zur Darstellung der Abläufe beim triggergesteuerten Konfigurationswechsel in einem Routersystem in einer einfachen Ausführungsform und
- Figur 2: ein Verlaufsdiagramm zur Darstellung der Abläufe beim triggergesteuerten Konfigurationswechsel in einem Routersystem in einer Ausführungsform mit einer möglichen Abhängigkeit von verschiedenen Triggern.

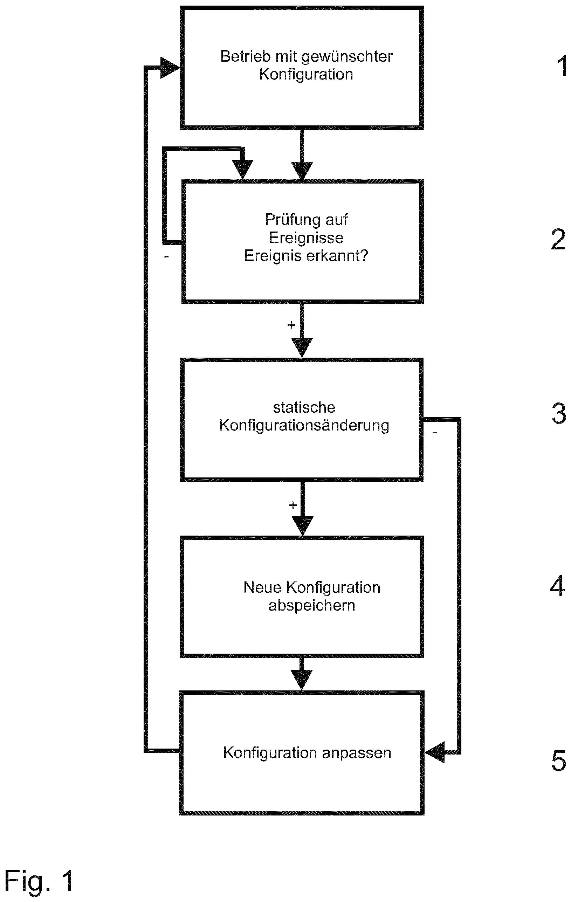

Figur 1 zeigt ein Verlaufsdiagramm zur Darstellung der Abläufe beim triggergesteuerten Konfigurationswechsel in einem Routersystem in einer einfachen Ausführungsform. Dabei ist mit dem Bezugszeichen 1 ein Zustand des Routersystems gekennzeichnet, in dem ein stabiler Betrieb mit einer bestimmten Routerkonfiguration möglich ist. Die Empfangseinrichtung ist in diesem Zustand bereit zum Empfang von Triggersignalen. Sie überprüft regelmäßig, ob ein Triggersignal eingeht. Dies ist bei Position 2 dargestellt. Geht kein Triggersignal ein, verbleibt das Routersystem in diesem Zustand und die Überprüfung auf ein eingehendes Triggersignal erfolgt erneut. Wird hingegen ein Triggersignal erkannt, erfolgt in dieser Ausführungsform bei Position 3 eine Bewertung und/oder Interpretation des Triggersignals durch die Konfigurationseinrichtung. Es wird überprüft, ob es sich bei dem durch das einkommende Triggersignal ausgelösten Konfigurationswechsel um eine dauerhafte Konfigurationsänderung oder eine lediglich temporäre bez. dynamische oder volatile Konfigurationsänderung handelt. Soll die Konfigurationsänderung dauerhaft im System angewandt werden, wird sie bei Position 4 in einem bevorzugt nicht flüchtigen Speicher für Routerkonfigurationen abgelegt, die langfristig verfügbar sein sollen. Das Ablegen in einem nicht flüchtigen Speicher ist insbesondere dann vorteilhaft, wenn die neue Routerkonfiguration dauerhaft, beispielsweise sofort beim Einschalten des Routers, zur Verfügung stehen soll. Nach dem Abspeichern der Konfiguration wird diese bei Position 5 aktiviert und das Routersystem in einen Zustand versetzt, in dem es mit dieser neuen Routerkonfiguration betrieben werden kann.

Handelt es sich bei der in Position 3 analysierten Konfigurationsänderung um eine lediglich temporäre bez. dynamische oder volatile Konfigurationsänderung kann die aktuell gültige Konfiguration, die beispielsweise in einem flüchtigen Speicher abgelegt ist, durch diese ersetzt werden. Die neue Konfiguration ist dann, wie oben beschrieben, an Position 5 als aktive Konfiguration für die Routerkonfiguration verantwortlich, jedoch lediglich in einem flüchtigen Speicher abgelegt. Bei einem Neustart des Routersystems - z.B. nach einer durch die neue aktive Konfiguration hervorgerufenen Fehlfunktion - wird dieses somit aus dem flüchtigen Speicher gelöscht und die zuvor aktive, stabil laufende Konfiguration wird bei einem Neustart als aktive Konfiguration gestartet.

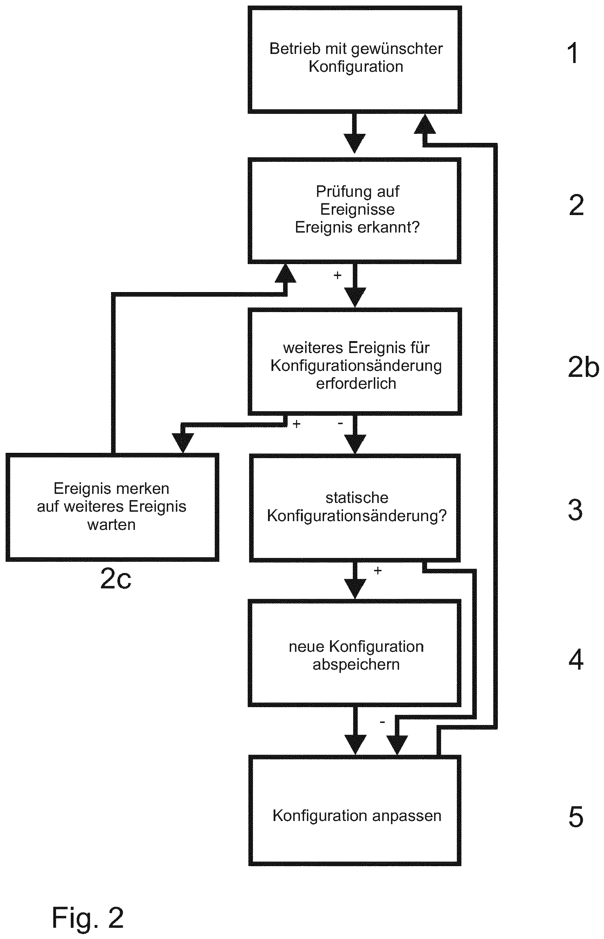

Figur 2 zeigt ein Verlaufsdiagramm zur Darstellung der Abläufe beim triggergesteuerten Konfigurationswechsel in einem Routersystem in einer Ausführungsform mit einer möglichen Abhängigkeit von verschiedenen Triggern. In den Positionen 1, 2, 3, 4 und 5 erfolgen im Wesentlichen dieselben Abläufe wie im Zusammenhang mit Fig. 1 beschrieben. Zwischen Positionen 2 und 3 sind jedoch eine Position 2b und 2c eingeschoben. So erfolgt bei Position 2b die zusätzliche Abfrage, ob ein weiteres Triggersignal notwendig ist, um auf Basis des bei Fig. 2 erkannten Triggersignals einen Konfigurationswechsel vorzunehmen. Ein Beispiel für eine solche Mehrfachabfrage von Triggersignalen könnte beispielsweise bei Wartungsarbeiten am Routersystem sinnvoll sein. So könnte beispielsweise ein Fernwartungsprofil mittels eines ersten Triggersignals initiiert werden, jedoch die Anwesenheit eines Technikers vor Ort notwendig sein, der gewährleistet, dass der Router gefahrlos in diesen Zustand geschaltet werden kann und dies beispielsweise durch einen zweiten Trigger, z.B. das einstecken eines Schlüssels (z.B. USB-Stick oder Code-Karte) autorisiert. Ist ein weiterer Trigger vor dem Konfigurationswechsel notwendig, durchläuft das in Fig. 2 dargestellte Verfahren eine Schleife über Position 2c. Alle bisherigen Trigger werden gespeichert (Pos 2c) und die Abfrage nach einem weiteren Triggersignal bei 2 erfolgt erneut. Erst wenn bei 2b alle Triggersignale detektiert wurden, die für den vorgesehenen Konfigurationswechsel notwendig sind, wird der Verfahrensschritt 3 durchlaufen und wie im Zusammenhang mit Fig. 1 beschrieben, überprüft, ob es sich um eine statische oder dynamische Konfigurationsänderung handelt. Die weiteren Verfahrensschritte 4 und 5 verlaufen wieder analog Fig. 1. Die Anzahl der Triggersignale, die dabei für einen Konfigurationswechsel notwendig sind, ist prinzipiell nicht auf zwei begrenzt. Für komplexe Konfigurationswechsel, die beispielsweise auch die intensive Nutzung teurer Datenleitungen beinhaltet, kann auch eine Bestätigung durch drei oder mehr Triggersignale notwendig sein. So könnte beispielsweise die Umschaltung des Routersystems auf die intensive Nutzung eines Mobilfunknetzes zur Datenübertragung von der Tageszeit, dem Datenvolumen, der Kapazität des Datenkanals und der Autorisierung einer dazu berechtigten Person abhängig sein.

## Patentansprüche

1. Routersystem zur Übertragung von Daten zwischen mindestens zwei verschiedenen Datennetzen, wobei das Routersystem eine im Gehäuse des Routersystems angeordnete Konfigurationseinrichtung zum Erstellen, Speichern und Verwalten von mindestens zwei Routerkonfigurationen umfasst,
**dadurch gekennzeichnet, dass**
das Routersystem mindestens eine Empfangseinrichtung aufweist, über welche mindestens drei verschiedene Triggersignale empfangbar sind, und wobei die Empfangseinrichtung über eine Datenverbindung mit der Konfigurationseinrichtung verbunden ist und die Konfigurationseinrichtung dazu geeignet ist in Abhängigkeit von den mindestens drei verschiedenen Triggersignalen in dem Routersystem eine andere Routerkonfiguration als die zum Zeitpunkt des Empfangs des Triggersignals aktive Routerkonfiguration aktiv zu schalten, wobei mindestens eines der von der Empfangseinrichtung empfangbaren Triggersignale ein Triggersignal ist, das ausgewählt ist aus einer Gruppe die
a) Eingang einer E-Mail Nachricht der vom Router regelmäßig auf neue Nachrichten überprüft wird,
b) Überschreiten oder Unterschreiten einer festgelegten Temperatur, gemessen durch Sensoren im Gehäuse des Router oder durch einen extern angeschlossene Temperatursensor,
c) Überschreiten oder Unterschreiten eines festgelegten Werts der externen Versorgungsspannung,
d) Ausfall einer von zwei oder mehreren anliegenden externen Versorgungsspannungen,
e) Detektion eines Schaltvorgangs an einem digitalen Eingang des Routers,
f) Überschreiten oder Unterschreiten eines konfigurierten Spannungswertes oder eines Stromwerts an einem analogen Eingang des Routers,
g) Empfang einer Kurzmitteilung bei einem mobilfunkfähigen Router,
h) Erreichen einer bestimmten Uhrzeit,
i) Ablauf einer definierten Zeitdauer (Stoppuhr),
j) Ereignis aufgrund der Erkennung eines neu angesteckten USB Geräts an einem USB-Anschluss des Routers und
k) Ereignis aufgrund empfangener Daten über eine serielle Schnittstelle umfasst, wobei als eine Änderung der Routerkonfiguration jegliche Änderung in der Konfiguration eines Routersystems bezeichnet wird, wobei es sich dabei um die zumindest teilweise Änderung von Konfigurationsprofilen handelt, und wobei die Empfangseinrichtung zum Empfang von Triggersignalen geeignet ist, welche ausgewählt sind aus einer Gruppe die
i) ein Ereignis aufgrund einer fehlerhaften Authentifizierung zur Konfiguration des Geräts,
t) ein Ereignis bei Unterschreitung des freien RAM Speichers des Routers umfasst.

2. Routersystem nach Anspruch 1,
**dadurch gekennzeichnet, dass**
durch die Empfangseinrichtung mindestens vier verschiedene Triggersignale empfangbar sind und die Konfigurationseinrichtung dazu geeignet ist, in Abhängigkeit von den verschiedenen Triggersignalen in dem Routersystem eine andere Routerkonfiguration als die zum Zeitpunkt des Empfangs des Triggersignals aktive Routerkonfiguration aktiv zu schalten.

3. Routersystem nach mindestens einem der vorangehenden Ansprüche,
**dadurch gekennzeichnet, dass**
die Konfigurationseinrichtung verschiedene Speicher oder Speicherbereiche für Routerkonfigurationsdaten aufweist, wobei ein Speicher oder Speicherbereich ein flüchtiger Speicher oder Speicherbereich für temporär aktive Routerkonfigurationen ist und ein anderer Speicher oder Speicherbereich ein nicht flüchtiger Speicher oder Speicherbereich für eine Routerkonfiguration ist, die bei einem Neustart des Routersystems aktiv ist.

4. Routersystem nach mindestens einem der vorangehenden Ansprüche,
**dadurch gekennzeichnet, dass**
das Routersystem über eine Bewertungseinrichtung verfügt, mittels der eine Klassifizierung von Routerkonfigurationen möglich ist.

5. Routersystem nach mindestens einem der vorangehenden Ansprüche,
**dadurch gekennzeichnet, dass**
es einen Schalter zum Umschalten zwischen zwei Routerkonfigurationen aufweist.

6. Verfahren zur Änderung von einer aktiven Routerkonfigurationen zu einer anderen Routerkonfiguration in einem Routersystem,
**dadurch gekennzeichnet, dass**
eine Empfangseinrichtung, welche mindestens zum Empfang von drei verschiedenen Triggersignalen geeignet ist, ein Triggersignal empfängt und eine Information über den Empfang des Triggersignals über eine Datenverbindung an eine Konfigurationseinrichtung sendet, woraufhin die Konfigurationseinrichtung in Abhängigkeit von dem eingegangenen Triggersignal in dem Routersystem eine andere Routerkonfiguration als die zum Zeitpunkt des Empfangs des Triggersignals aktive Routerkonfiguration aktiviert, wobei die Empfangseinrichtung eine Information an die Konfigurationseinrichtung auf Basis eines empfangenen Triggersignals sendet, welches ausgewählt ist aus einer Gruppe die
a) Eingang einer E-Mail Nachricht der vom Router regelmäßig auf neue Nachrichten überprüft wird,
b) Überschreiten oder Unterschreiten einer festgelegten Temperatur, gemessen durch Sensoren im Gehäuse des Routers oder durch einen extern angeschlossene Temperatursensor,
c) Überschreiten oder Unterschreiten eines festgelegten Werts der externen Versorgungsspannung,
d) Ausfall einer von zwei oder mehreren anliegenden externen Versorgungsspannungen,
e) Detektion eines Schaltvorgangs an einem digitalen Eingang des Routers,
f) Überschreiten oder Unterschreiten eines konfigurierten Spannungswertes oder eines Stromwerts an einem analogen Eingang des Routers,
g) Empfang einer Kurzmitteilung bei einem mobilfunkfähigen Router,
h) Erreichen einer bestimmten Uhrzeit,
i) Ablauf einer definierten Zeitdauer (Stoppuhr),
j) Ereignis aufgrund der Erkennung eines neu angesteckten USB Geräts an einem USB-Anschluss des Routers und
k) Ereignis aufgrund empfangener Daten über eine serielle Schnittstelle umfasst, wobei als eine Änderung der Routerkonfiguration jegliche Änderung in der Konfiguration eines Routersystems bezeichnet wird, wobei es sich dabei um die zumindest teilweise Änderung von Konfigurationsprofilen handelt. und wobei die Empfangseinrichtung zum Empfang von Triggersignalen geeignet ist, welche ausgewählt sind aus einer Gruppe die
i) ein Ereignis aufgrund einer fehlerhaften Authentifizierung zur Konfiguration des Geräts,
t) ein Ereignis bei Unterschreitung des freien RAM Speichers des Routers umfasst.

7. Verfahren nach Anspruch 6,
**dadurch gekennzeichnet, dass**
die Empfangseinrichtung zum Empfang von mindestens vier verschiedenen Triggersignalen geeignet ist und sie in Abhängigkeit von dem eingehenden Triggersignal eine entsprechende Information an die Konfigurationseinrichtung sendet.

8. Verfahren nach mindestens einem der Ansprüche 6 - 7,
**dadurch gekennzeichnet, dass**
in Abhängigkeit des von der Empfangseinrichtung empfangenen Triggersignals die aktive Routerkonfiguration zu einer anderen Routerkonfiguration in einem Routersystem verändert wird, wobei die andere, nach Empfang des Triggersignals aktivierte Routerkonfiguration lediglich temporär aktiv geschaltet wird.

9. Verfahren nach Anspruch 8,
**dadurch gekennzeichnet, dass**
die nach Empfang des Triggersignals temporär aktivierte Routerkonfiguration bei einem Neustart des Routersystems und/oder nach Ablauf eines vorgegebenen Zeitintervalls und/oder nach Erreichen eines vorgegebenen Zeitpunkts deaktiviert wird und eine andere Routerkonfiguration aktiv geschaltet wird.

10. Verfahren nach mindestens einem der Ansprüche 6 - 9,
**dadurch gekennzeichnet, dass**
die Änderung von einer aktiven Routerkonfiguration zu einer anderen Routerkonfiguration in dem Routersystem nach Empfang von mehreren, jeweils für diese Änderung notwendigen Triggersignalen vorgenommen wird.

11. Verfahren nach Anspruch 10,
**dadurch gekennzeichnet, dass**
die Änderung der Konfiguration anhand eines externen Schaltsignals geändert wird, aber in Abhängigkeit der Uhrzeit unterschiedliche Konfigurationen verwenden werden.

12. Verfahren nach mindestens einem der Ansprüche 10 - 11,
**dadurch gekennzeichnet, dass**
eine Kombination von Ereignissen logisch verknüpft wird, so dass ein bestimmtes Ereignis nur dann eine Änderung der Konfiguration auslöst, wenn ein anderes Ereignis nicht aufgetreten ist (NAND), oder wenn zwei Ereignisse wahlweise auftreten (OR), und dieselbe Änderung auslösen sollen.

## Claims

1. Router system for transmitting data between at least two different data networks, the router system comprising a configuration device arranged in the housing of the router system for creating, storing and managing at least two router configurations, **characterised in that**
the router system comprises at least one receiving device, by means of which at least three different trigger signals can be received, and the receiving device being connected to the configuration device via a data connection and the configuration device being suitable for activating a different router configuration from the router configuration that is active at the time the trigger signal is received, depending on the at least three different trigger signals in the router system, at least one of the trigger signals that can be received by the receiving device being a trigger signal selected from a group comprising
a) arrival of an e-mail message that is regularly checked by the router for new messages,
b) exceeding or falling below a specified temperature, measured by sensors in the housing of the router or by an externally connected temperature sensor,
c) exceeding or falling below a specified value of the external supply voltage,
d) failure of one of two or more applied external supply voltages,
e) detection of a switching process at a digital input of the router,
f) exceeding or falling below a configured voltage value or a current value at an analogue input of the router,
g) receiving a short message from a cellular-capable router,
h) reaching a certain time of day,
i) elapse of a defined period of time (stopwatch),
j) event due to detection of a USB device plugged back into a USB port of the router and
k) event due to received data via a serial interface,
any change in the configuration of a router being referred to as a change of the router configuration, this change being the at least partial change of configuration profiles, and the receiving device being suitable for receiving trigger signals which are selected from a group comprising
i) an event due to failed authentication for configuring the device,
t) an event when the free RAM storage of the router is not reached.

2. Router system according to claim 1,
**characterised in that**
at least four different trigger signals can be received by the receiving device and the configuration device is suitable for activating a different router configuration from the router configuration that is active at the time the trigger signal is received, depending on the different trigger signals in the router system.

3. Router system according to at least one of the preceding claims, **characterised in that** the configuration device comprises different memories or memory regions for router configuration data, one memory or memory region being a volatile memory or memory region for temporarily active router configurations and another memory or memory region being a non-volatile memory or memory region for a router configuration that is active when the router system is restarted.

4. Router system according to at least one of the preceding claims,
**characterised in that**
the router system has an evaluation device by means of which router configurations can be classified.

5. Router system according to at least one of the preceding claims,
**characterised in that**
it has a switch for switching between two router configurations.

6. Method for changing from one active router configuration to another router configuration in a router system,
**characterised in that**
a receiving device which is suitable at least for receiving three different trigger signals receives a trigger signal and sends information regarding receiving the trigger signal to a configuration device via a data connection, whereupon the configuration device, depending on the received trigger signal in the router system, activates a different router configuration from the router configuration that is active at the time the trigger signal is received, the receiving device sending information to the configuration device on the basis of a received trigger signal, which is selected from a group comprising
a) arrival of an e-mail message that is regularly checked by the router for new messages,
b) exceeding or falling below a specified temperature, measured by sensors in the housing of the router or by an externally connected temperature sensor,
c) exceeding or falling below a specified value of the external supply voltage,
d) failure of one of two or more applied external supply voltages,
e) detection of a switching process at a digital input of the router,
f) exceeding or falling below a configured voltage value or a current value at an analogue input of the router,
g) receiving a short message from a cellular-capable router,
h) reaching a certain time of day,
i) elapse of a defined period of time (stopwatch),
j) event due to detection of a USB device plugged back into a USB port of the router and
k) event due to received data via a serial interface,
any change in the configuration of a router system being referred to as a change of the router configuration, this change being the at least partial change of configuration profiles, and the receiving device being suitable for receiving trigger signals which are selected from a group comprising
i) an event due to failed authentication for configuring the device,
t) an event when the free RAM storage of the router is not reached.

7. Method according to claim 6,
**characterised in that**
the receiving device is suitable for receiving at least four different trigger signals and sends corresponding information to the configuration device depending on the incoming trigger signal.

8. Method according to at least one of claims 6-7,
**characterised in that**
depending on the trigger signal received by the receiving device, the active router configuration is changed to another router configuration in a router system, the other router configuration activated after receiving the trigger signal being activated only temporarily.

9. Method according to claim 8,
**characterised in that**
the router configuration temporarily activated after the trigger signal is received is deactivated when the router system is restarted and/or after a predetermined time interval has elapsed and/or after a predetermined time has been reached, and another router configuration is activated.

10. Method according to at least one of claims 6-9,
**characterised in that**
the change from one active router configuration to another router configuration in the router system is implemented after receiving a plurality of trigger signals which are each necessary for this change.

11. Method according to claim 10,
**characterised in that**
the change in the configuration will be changed based on an external switching signal, but different configurations depending on the time of day will be used.

12. Method according to at least one of claims 10-11,
**characterised in that**
a combination of events is logically linked so that a specific event triggers a change in the configuration only if another event has not occurred (NAND), or if two events occur alternatively (OR) and trigger the same change.

## Revendications

1. Système de routeur pour le transfert de données entre au moins deux réseaux de données différents, le système de routeur comportant un dispositif de configuration disposé dans le boîtier du système de routeur pour la création, la mémorisation et la gestion d'au moins deux configurations de routeur,
**caractérisé par le fait que**
le système de routeur présente au moins un dispositif de réception, sur lequel au moins trois signaux de déclenchement différents sont aptes à être reçus, et dans lequel le dispositif de réception est connecté au dispositif de configuration par l'intermédiaire d'une connexion de données et le dispositif de configuration est conçu pour commuter de façon active en fonction desdits au moins trois signaux de déclenchement différents dans le système de routeur une configuration de routeur autre que la configuration de routeur active au moment de la réception du signal de déclenchement, au moins l'un des signaux de déclenchement aptes à être reçus par le dispositif de réception étant un signal de déclenchement qui est choisi dans un groupe qui comporte :
a) entrée d'un message de courrier électronique qui est vérifié par le routeur régulièrement sur de nouveaux messages ;
b) dépassement ou sous-dépassement d'une température fixée, mesurée par des capteurs dans le boîtier du routeur ou par un capteur de température raccordé de façon externe ;
c) dépassement ou sous-dépassement d'une valeur fixée de la tension d'alimentation externe ;
d) défaillance de l'une d'au moins deux tensions d'alimentation externes appliquées ;
e) détection d'une opération de commutation sur une entrée numérique du routeur ;
f) dépassement ou sous-dépassement d'une valeur de tension configurée ou d'une valeur de courant sur une entrée analogique du routeur ;
g) réception d'un message court dans le cas d'un routeur permettant un mode cellulaire ;
h) atteinte d'une heure déterminée ;
i) expiration d'un laps de temps défini (chronomètre) ;
j) événement en raison de la détection d'un appareil USB nouvellement rebranché sur une connexion USB du routeur ; et
k) événement en raison des données reçues sur une interface série,
dans lequel toute modification dans la configuration d'un système de routeur est désignée comme une modification de la configuration de routeur, dans lequel il s'agit à cet égard de la modification au moins partielle de profils de configuration, et dans lequel le dispositif de réception est conçu pour la réception de signaux de déclenchement, lesquels sont choisis dans un groupe qui comporte :
i) un événement en raison d'une authentification erronée pour la configuration de l'appareil ;
t) un événement lors d'un sous-dépassement de la mémoire RAM libre du routeur.

2. Système de routeur selon la revendication 1,
**caractérisé par le fait que**
par le dispositif de réception, au moins quatre signaux de déclenchement différents sont aptes à être reçus et le dispositif de configuration est conçu pour commuter activement en fonction des signaux de déclenchement différents dans le système de routeur une configuration de routeur autre que la configuration de routeur active au moment de la réception du signal de déclenchement.

3. Système de routeur selon au moins l'une des revendications précédentes,
**caractérisé par le fait que**
le dispositif de configuration présente différentes mémoires ou zones de mémoire pour données de configuration de routeur, dans lequel une mémoire ou une zone de mémoire est une mémoire ou zone de mémoire volatile pour configurations de routeur temporairement actives et une autre mémoire ou zone de mémoire est une mémoire ou zone de mémoire non volatile pour une configuration de routeur qui est active lors d'un redémarrage du système de routeur.

4. Système de routeur selon au moins l'une des revendications précédentes,
**caractérisé par le fait que**
le système de routeur dispose d'un dispositif d'évaluation au moyen duquel une classification de configurations de routeur est possible.

5. Système de routeur selon au moins l'une des revendications précédentes,
**caractérisé par le fait que**
il présente un commutateur pour la commutation entre deux configurations de routeur.

6. Procédé de modification d'une de configurations de routeur actives en une autre configuration de routeur dans un système de routeur,
**caractérisé par le fait que**
un dispositif de réception, lequel est conçu au moins pour la réception de trois signaux de déclenchement différents, reçoit un signal de déclenchement et envoie une information sur la réception du signal de déclenchement par l'intermédiaire d'une connexion de données sur un dispositif de configuration, après quoi le dispositif de configuration active, en fonction du signal de déclenchement reçu dans le système de routeur, une configuration de routeur autre que la configuration de routeur active au moment de la réception du signal de déclenchement, dans lequel le dispositif de réception envoie une information au dispositif de configuration sur la base d'un signal de déclenchement reçu, lequel est choisi dans un groupe qui comporte :
a) entrée d'un message de courrier électronique qui est vérifié par le routeur régulièrement sur de nouveaux messages ;
b) dépassement ou sous-dépassement d'une température fixée, mesurée par des capteurs dans le boîtier du routeur ou par un capteur de température raccordé de façon externe ;
c) dépassement ou sous-dépassement d'une valeur fixée de la tension d'alimentation externe ;
d) défaillance de l'une d'au moins deux tensions d'alimentation externes appliquées ;
e) détection d'une opération de commutation sur une entrée numérique du routeur ;
f) dépassement ou sous-dépassement d'une valeur de tension configurée ou d'une valeur de courant sur une entrée analogique du routeur ;
g) réception d'un message court dans le cas d'un routeur permettant un mode cellulaire ;
h) atteinte d'une heure déterminée ;
i) expiration d'un laps de temps défini (chronomètre) ;
j) événement en raison de la détection d'un appareil USB nouvellement rebranché sur une connexion USB du routeur ; et
k) événement en raison des données reçues sur une interface série,
dans lequel toute modification dans la configuration du système de routeur est désignée comme une modification de la configuration de routeur, dans lequel il s'agit à cet égard de la modification au moins partielle de profils de configuration, et dans lequel le dispositif de réception est conçu pour la réception de signaux de déclenchement, lesquels sont choisis dans un groupe qui comporte :
i) un événement en raison d'une authentification erronée pour la configuration de l'appareil ;
t) un événement lors d'un sous-dépassement de la mémoire RAM libre du routeur.

7. Procédé selon la revendication 6,
**caractérisé par le fait que** le dispositif de réception est conçu pour la réception d'au moins quatre signaux de déclenchement différents et qu'il envoie en fonction du signal de déclenchement entrant une information correspondante au dispositif de configuration.

8. Procédé selon au moins l'une des revendications 6 et 7,
**caractérisé par le fait que**
en fonction du signal de déclenchement reçu par le dispositif de réception, la configuration de routeur active est modifiée en une autre configuration de routeur dans un système de routeur, l'autre configuration de routeur activée après réception du signal de déclenchement étant seulement commutée de façon temporairement active.

9. Procédé selon la revendication 8,
**caractérisé par le fait que**
la configuration de routeur activée temporairement après réception du signal de déclenchement est désactivée lors d'un redémarrage du système de routeur et/ou à l'expiration d'un intervalle de temps prédéterminé et/ou après l'atteinte d'un moment prédéterminé et une autre configuration de routeur est commutée activement.

10. Procédé selon au moins l'une des revendications 6 à 9,
**caractérisé par le fait que**
la modification d'une configuration de routeur active en une autre configuration de routeur dans le système de routeur après réception de plusieurs signaux de déclenchement nécessaires, à chaque pour cette modification, est effectuée.

11. Procédé selon la revendication 10,
**caractérisé par le fait que**
la modification de la configuration est modifiée sur la base d'un signal de commutation externe, mais en fonction de l'heure, des configurations différentes sont utilisées.

12. Procédé selon au moins l'une des revendications 10 et 11,
**caractérisé par le fait que**
une combinaison d'événements est associée de façon logique, de telle sorte qu'un événement déterminé déclenche alors une modification de la configuration seulement si un autre événement n'est pas survenu (NAND), ou si deux événements se produisent au choix (OR), et doivent déclencher la même modification.
